# EUROPÄISCHE PATENTSCHRIFT

(11) **EP 1 191 069 B1**
(45) Veröffentlichungstag und Bekanntmachung des Hinweises auf die Patenterteilung: **26.03.2008**
(21) Anmeldenummer: 01122159.5
(22) Anmeldetag: 15.09.2001
(51) Int. Cl.: C09B 29/01, C09B 29/30, C09B 29/00

(54) **Wasserlösliche Monoazofarbstoffe, Verfahren zu deren Herstellung und deren Verwendung**
Watersoluble monoazo dyestuffs, process for their preparation and their use
Colorants monoazoiques solubles dans l'eau, procédé pour leur préparation et leur utilisation

(30) Priorität: 23.09.2000 DE 10047234
(43) Veröffentlichungstag der Anmeldung: 27.03.2002
(73) Patentinhaber: DyStar Textilfarben GmbH & Co. Deutschland KG, 65926 Frankfurt am Main (DE)
(72) Erfinder: Engel, Aloys, Dr., 51381 Leverkusen (DE)

(56) Entgegenhaltungen:
- DE-C- 614 405
- US-A- 1 824 686
- US-A- 1 893 244
- US-A- 2 785 158

## Beschreibung

Die vorliegende Erfindung betrifft neue wasserlösliche Monoazofarbstoffe, Verfahren zu deren Herstellung und deren Verwendung zum Färben und Bedrucken von carbonamidgruppen-haltigen Materialien, insbesondere Carbonamidgruppen-haltigen Fasermaterialien.

Die Patentschriften DE-B 728 485, DE-B 731677, DE-B 731770 und GB 483442 beschreiben Monoazofarbstoffe zur Verwendung als Farbstoffe für natürliche und synthetische carbonamidhaltige Fasermaterialien, wie beispielsweise Wolle, Seide oder Polyamidfasern, wie beispielsweise Polyamid 6 oder Polyamid 6,6. Diese besitzen jedoch gewisse anwendungstechnische Mängel, wie beispielsweise unbefriedigende Nass- und Schweißechtheiten und unbefriedigende Lichtechtheiten.

Die Patentschrift US-A 1893444 beschreibt Monoazofarbstoffe, die durch die Kupplung einer Aryloxyanilin auf eine 1-(N-Arylsulfonyl)amino-8-hydroxynaphthalin-3,6-disulfonsäure hergestellt werden.
Aus der Patentschrift US-A 2785158 sind Monoazofarbstoffe bekannt, die aus 2-(2'-Cyclohexylphenoxy)anilinen und 1-Acylamino-8-hydroxynaphthalinsulfonsäuren hergestellt werden.
Die Patentschrift DE-C 614405 offenbart die Herstellung von Monoazofarbstoffen durch die Kupplung von Aminodiaryläthern mit 1-Acylamino-8-hydroxynaphthalin-6-sulfonsäuren. Diese Verbindungen werden als Farbstoffe für Wolle oder Seide verwendet.

Mit der vorliegenden Erfindung wurde nunmehr gefunden, dass Farbstoffe der allgemeinen Formel (1) überraschenderweise deutlich bessere Nass- und Schweißechtheiten und bessere Lichtechtheiten haben.

Die Erfindung betrifft somit Farbstoffe der allgemeinen Formel (1): 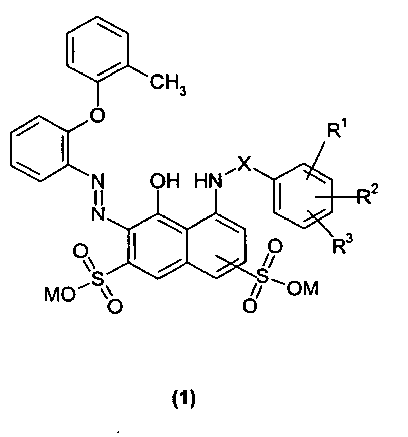 worin
- X: für -COCH₂O- steht;
- M: für Wasserstoff, Ammonium, ein Alkalimetall oder das Äquivalent eines Erdalkalimetalls steht ;
- R¹, R², R³: unabhängig voneinander Wasserstoff, Halogen, beispielsweise Fluor, Chlor oder Brom, gegebenenfalls ein mit Chlor oder Hydroxy- substitutiertes C1 bis C₄ -Alkyl, beispielsweise 2-Chlorethyl, 2-Hydroxyethyl, gegebenenfalls ein mit Chlor oder Hydroxy substituiertes C₁ bis C₄- Alkoxy, beispielsweise 2-Chlorethoxy, 2-Hydroxyethoxy, bedeuten und die Sulfogruppe in 3 oder 4 Stellung zur NH-Gruppe steht.

Bevorzugte Ausführungsformen der erfindungsgemäßen Farbstoffe entsprechen Farbstoffen der allgemeinen Formel (2) 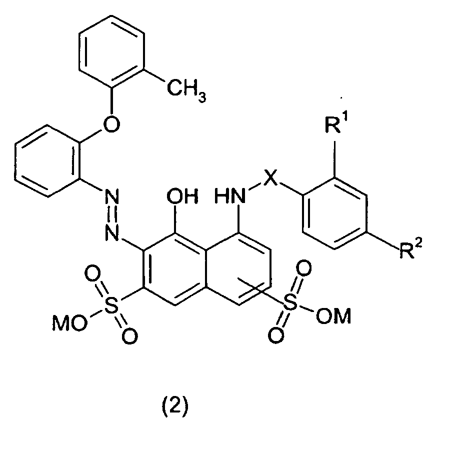 worin
- M: für Wasserstoff, Ammonium, ein Alkalimetall oder das Äquivalent eines Erdalkalimetalls steht
- X: für -COCH₂O- steht und R¹, R² unabhängig voneinander Wasserstoff, Chlor oder C₁ bis C₄- Alkyl bedeuten und die Sulfogruppe in 3- oder 4- Stellung zur NH-Gruppe steht.

Ganz besonders bevorzugte Ausführungsformen der erfindungsgemäßen Farbstoffe sind Farbstoffe der allgemeinen Formel (2), worin X für -COCH₂O- steht und R¹ und R² unabhängig voneinander Wasserstoff oder Chlor bedeuten und die Sulfogruppe jeweils in 3- oder 4- Stellung zur NH-Gruppe steht.

Die erfindungsgemäßen Farbstoffe können in üblicher Weise hergestellt werden, so beispielsweise mittels der üblichen Diazotierungs- und Kupplungsreaktionen in einer dem Fachmann geläufigen Weise und mit den hierzu erforderlichen Mengenanteilen.

Beispielsweise kann man ausgehend von einer Verbindung der Formel (3) 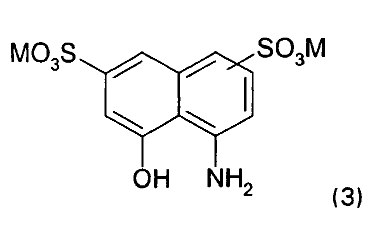 durch Kondensation mit Säurechloriden der allgemeinen Formel (4) 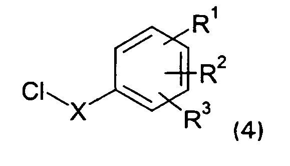 worin M, X, R¹, R² und R³ die oben angegebenen Bedeutungen haben, die Kupplungskomponente der allgemeinen Formel (5) herstellen.

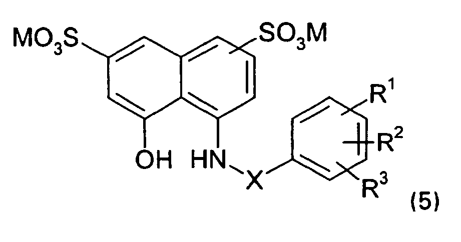

Nach Diazotierung des Amins der Formel (6) 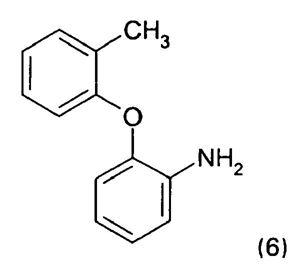 und Kupplung auf die Kupplungskomponente der Formel (5) sind die Farbstoffe der allgemeinen Formel (1) zugänglich.

Die Abscheidung und Isolierung der erfindungsgemäßen Verbindungen der allgemeinen Formel (1) aus den wässrigen Syntheselösungen bzw. -suspensionen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung bzw. -suspension, beispielsweise durch Sprühtrocknung.

Die erfindungsgemäßen Farbstoffe können als Präparation in fester oder in flüssiger Form vorliegen. Sie enthalten im allgemeinen die bei wasserlöslichen Farbstoffen üblichen Elektrolytsalze, wie Natriumchlorid, Kaliumchlorid und Natriumsulfat, und sie können zusätzlich die für Säurefarbstoffe üblichen ionischen Stellmittel, wie beispielsweise Naphthalinsulfonsäure-Formaldehyd-Kondensationsprodukte oder nichtionische Stellmittel, beispielsweise Dextrin und die für Handelsfarbstoffe üblichen Hilfsmittel enthalten.

Im allgemeinen liegen die erfindungsgemäßen Farbstoffe als Farbstoffpulver oder als Farbstoffgranulate mit einem Gehalt von 10 bis 90 Gew.-%, bezogen auf das Farbstoffpulver bzw. die Präparation, bevorzugt mit einem Gehalt von 30-80 Gew. %, vor.

Die erfindungsgemäßen Farbstoffe besitzen wertvolle anwendungstechnische Eigenschaften. Sie werden zum Färben oder Bedrucken nach an sich bekannten Methoden von Carbonamidgruppen-haltigen Materialien, beispielsweise synthetische und natürliche Polyamide und Polyurethane, insbesondere in Form von Fasern, beispielsweise Wolle und andere Tierhaare, Seide, Polyamid-6,6 und Polyamid-6, Polyamid-11, in Form von Flächengebilden, wie Leder oder von Folien, wie beispielsweise aus Polyamid, oder in der Masse, wie beispielsweise von Polyamid und Polyurethan, verwendet.

Bevorzugt kommen diese Materialien in Form von Fasermaterialien zur Anwendung, insbesondere in Form von Textilfasern, wie Geweben oder Garnen, wie in Form von Strängen oder Wickelkörpern. Die erfindungsgemäßen Farbstoffe liefern auf den genannten Materialien rote Färbungen mit hoher Brillanz und Egalität, sowie guten Allgemeinechtheiten, beispielsweise Nass- und Schweißechtheiten und sehr gute Lichtechtheiten.

Die vorliegende Erfindung betrifft somit auch die Verwendung der erfindungsgemäßen Farbstoffe zum Färben oder Bedrucken dieser Materialien bzw. Verfahren zum Färben oder Bedrucken solcher Materialien in an und für sich üblichen Verfahrensweisen, bei welchen man die erfindungsgemäßen Farbstoffe als Farbmittel einsetzt.

Die erfindungsgemäßen Farbstoffe lassen sich auf den genannten Substraten, insbesondere auf den genannten Fasermaterialien, nach den für wasserlösliche, Farbstoffe bekannten Anwendungstechniken applizieren und fixieren.

So erhält man mit ihnen nach dem Ausziehverfahren aus langer Flotte Färbungen mit sehr guten Echtheiten. Man färbt bevorzugt in wässrigem Bad bei Temperaturen zwischen 70 und 110°C, gegebenenfalls bei einer Temperatur bis zu 130°C unter Druck, und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozess bei dieser Temperatur zu Ende führt.

Auch lässt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes eines Alkylarylamins oder eines sulfonierten Alkylamins mit Ethylenoxid. So werden beispielsweise die erfindungsgemäßen Farbstoffe bevorzugt zunächst aus saurem Färbebad dem Ausziehprozess unterworfen.

Die hier beschriebene Verfahrensweise gilt auch zur Herstellung von Färbungen auf Fasermaterialien aus anderen natürlichen Polyamiden und aus synthetischen Polyamiden.

In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 70 und 110°C durchgeführt. Die Färbungen werden vorzugsweise bei Siedetemperatur oder in geschlossenen Färbeapparaturen bei Temperaturen bis zu 106°C ausgeführt werden.

Da die Wasserlöslichkeit der erfindungsgemäßen Farbstoffe sehr gut ist, lassen sie sich auch mit Vorteil bei üblichen kontinuierlichen Färbeverfahren einsetzen. Ferner sind die erfindungsgemäßen Farbstoffe gut mit anderen Farbstoffen kombinierbar.

Bei der Verwendung der erfindungsgemäßen Farbstoffe zum Bedrucken carbonamidhaltiger Materialien wie Wolle, Seide, Polyamid-6 oder Polyamid-6,6 werden die in üblicher Weise aus den Farbstoffen hergestellten Druckpasten, die unter anderem Lösungsvermittler, z. B. auf Basis von Fettalkoholethoxylaten und Verdickungsmittel, z. B. auf Basis von Galactomannan-Derivaten, enthalten, nach bekannten Techniken appliziert und fixiert, beispielsweise mit Sattdampf bei 102°C.

Die nachstehenden Beispiele dienen zur Erläuterung der Erfindung. Die Prozentangaben stellen Gewichtsprozente dar, sofern nicht anders vermerkt.

### Beispiel 1

### Diazotierung:

200,6 g 2-o-Tolyloxyanilin (99,2%ig) werden in 900 ml Wasser und 280 ml 30%iger Salzsäure gelöst. Nach Zugabe von 1000 g Eis fällt das Hydrochlorid des Amins teilweise aus. Man lässt innerhalb von 30 Minuten bei 0-5°C 231 ml NatriumnitritLösung ( 300 g/l ) zutropfen und rührt 1 Std. nach. Man zersetzt den Nitrit-Überschuss durch Zugabe von wenig Amidosulfonsäure-Lösung.

### Kupplung:

991 g 1-(N-2,4-Dichlorphenoxyacetyl)amino-8-hydroxynaphthalin-4,6-disulfonsäure ( 55%ig) werden in 5500 ml Wasser verrührt. Mit ca. 5 ml Natronlauge ( 400 g/l ) wird der pH-Wert auf 7 gestellt. Nach Zugabe von 27,5 g Natriumhydrogencarbonat pumpt man die Diazolösung innerhalb von 30 Min. zu und hält dabei den pH-Wert bei 8,5-9 durch Zutropfen von 190 ml Natronlauge ( 400 g / l). Nach Zugabe von 696 g Natriumchlorid lässt man 3 Std. bei Raumtemperatur rühren. Man filtriert den Farbstoff ab und erhält nach Trocknung bei 50°C im Vakuum 932 g trockenen Farbstoff (A), der Wolle in einem brillanten Rot färbt.

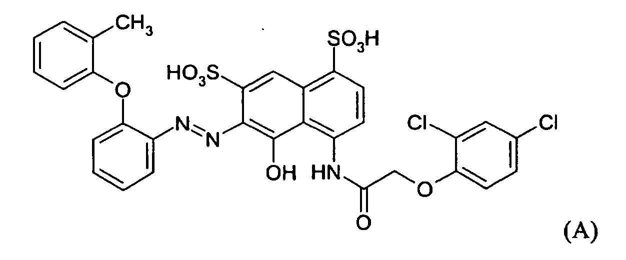

Ersetzt man die in Beispiel 1 angegebene Kupplungskomponente durch die allgemeine Kupplungskomponente (5), so erhält man die in nachfolgender Tabelle aufgeführten Farbstoffe, die Wolle bzw. Polyamid brillant rot färben:

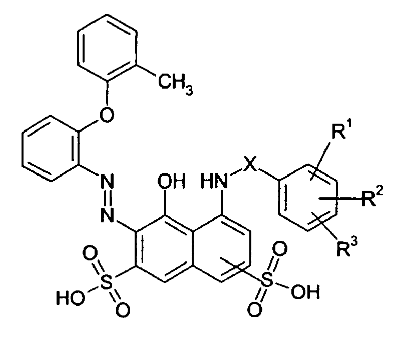

| Beispiel | X | R¹ | R² | R³ | Position - SO₃H |
|---|---|---|---|---|---|
| 2 | -COCH₂O- | 2-Cl | 4-Cl | H | 3 |
| 3 | -COCH₂O- | 2-Cl | H | H | 4 |
| 4 | -COCH₂O- | 2-Cl | H | H | 3 |
| 5 | -COCH₂O- | H | H | H | 4 |
| 6 | -COCH₂O- | H | H | H | 3 |
| 7 | -COCH₂O- | H | 4-CH₃ | H | 4 |
| 8 | -COCH₂O- | H | 4-CH₃ | H | 3 |
| 9 | -COCH₂O- | H | 4-OCH₃ | H | 4 |
| 10 | -COCH₂O- | H | 4-OCH₃ | H | 3 |

## Patentansprüche

1. Farbstoff der allgemeinen Formel (1) 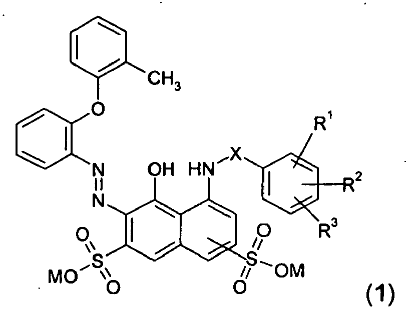 worin
M für Wasserstoff, Ammonium, ein Alkalimetall oder das Äquivalent eines Erdalkalimetalls steht;
X für -COCH₂O- steht;
R¹, R² und R³ unabhängig voneinander Wasserstoff, Halogen, gegebenenfalls ein mit Chlor oder Hydroxy- substitutiertes C₁ bis C₄-Alkyl, gegebenenfalls ein mit Chlor oder Hydroxy- substituiertes C₁ bis C₄- Alkoxy bedeuten und die Sulfogruppe in 3- oder 4- Stellung zur NH-Gruppe steht.

2. Farbstoff nach Anspruch 1, **dadurch gekennzeichnet, dass** R¹ und R² Wasserstoff oder Chlor und R³ Wasserstoff bedeuten.

3. Verfahren zur Herstellung eines Farbstoffes nach Anspruch 1 und/oder 2, ausgehend von einer Verbindung der Formel (3) 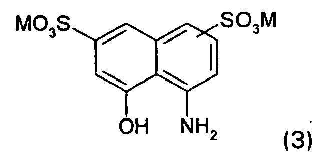 durch Kondensation mit einem Säurechlorid der allgemeinen Formel (4) 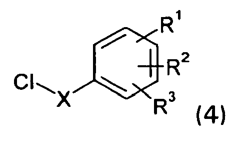 worin M, X, R¹, R² und R³ die oben angegebenen Bedeutungen haben, wobei man die Kupplungskomponente der allgemeinen Formel (5) erhält 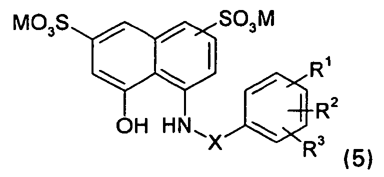 und nach Diazotierung des Amins der Formel (6) 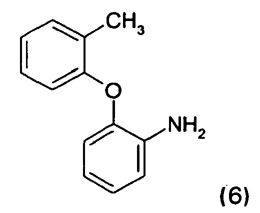 und Kupplung auf die Kupplungskomponente der Formel (5).

4. Verwendung eines Farbstoffes der allgemeinen Formel (1) nach Anspruch 1 und/oder 2 zum Färben oder Bedrucken von Carbonamidgruppen-haltigem Material.

5. Verfahren zum Färben oder Bedrucken von Carbonamidgruppen-haltigem Material, **dadurch gekennzeichnet, dass** man einen Farbstoff nach Anspruch 1 und/oder 2 in gelöster Form auf das Material bei einem pH-Wert von 3-7 und bei Temperaturen von 70-110°C aufbringt.

## Claims

1. A dye of the formula (1) 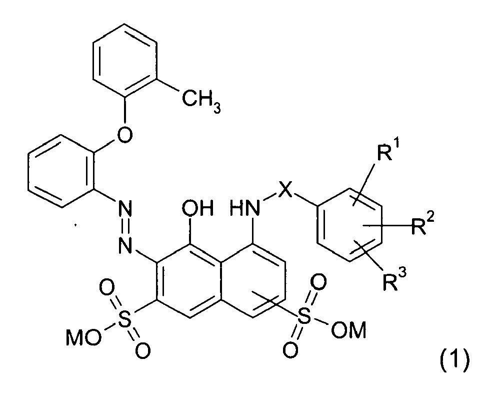 in which
M is hydrogen, ammonium, an alkali metal or the equivalent of an alkaline earth metal;
X is -COCH₂O-;
R¹, R² and R³ independently of one another are hydrogen, halogen, unsubstituted or chloro- or hydroxy-substituted C₁ to C₄ alkyl, unsubstituted or chloro- or hydroxy-substituted C₁ to C₄ alkoxy, and the sulfo group is in position 3 or 4 to the NH group.

2. A dye as claimed in claim 1 wherein R¹ and R² are hydrogen or chlorine and R³ is hydrogen.

3. A process for preparing a dye as claimed in claim 1 and/or 2 starting from a compound of the formula (3) 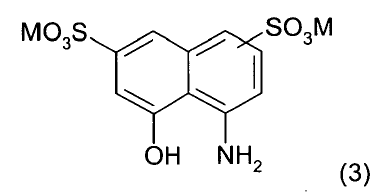 by condensing it with an acid chloride of the formula (4) 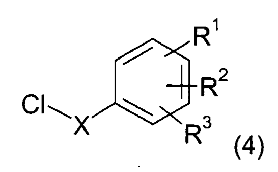 in which M, X, R¹, R² and R³ are as defined above to give the coupling component of the formula (5) 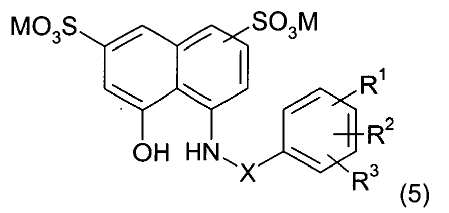 and by diazotizing the amine of the formula (6) 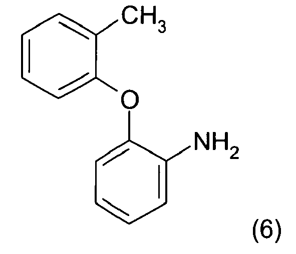 and coupling the product onto the coupling component of the formula (5).

4. The use of a dye of the formula (1) as claimed in claim 1 and/or 2 for dyeing or printing carboxamido-containing material.

5. A process for dyeing or printing carboxamido-containing material, which comprises applying a dye as claimed in claim 1 and/or 2 in dissolved form to the material at a pH of 3-7 and at temperatures of 70-110°C.

## Revendications

1. Colorant de formule générale (1) 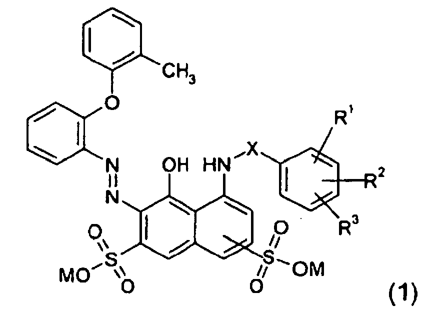 où
M représente hydrogène, ammonium, un métal alcalin ou l'équivalent d'un métal alcalino-terreux ;
X représente -COCH₂O- ;
R¹, R² et R³ signifient, indépendamment l'un de l'autre, hydrogène, halogène, alkyle en C₁ à C₄ le cas échéant substitué par chlore ou hydroxy, alcoxy en C₁ à C₄ le cas échéant substitué par chlore ou hydroxy et le groupe sulfo se trouve en 3ème ou 4ème position par rapport au groupe NH.

2. Colorant selon la revendication 1, **caractérisé en ce que** R¹ et R² signifient hydrogène ou chlore et R³ signifie hydrogène.

3. Procédé pour la préparation d'un colorant selon la revendication 1 et/ou 2, partant d'un composé de formule (3) 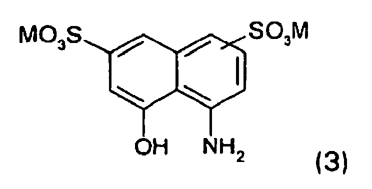 par condensation avec un chlorure d'acide de formule générale (4) 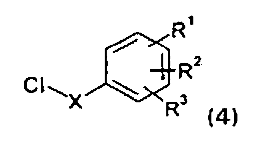 où les radicaux M, X, R¹, R² et R³ ont les significations susmentionnées, en obtenant le composant de couplage de formule générale (5) 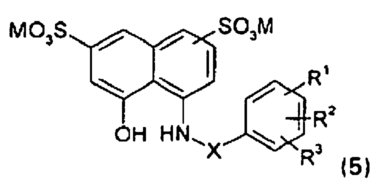 et après diazotation de l'amine de formule (6) 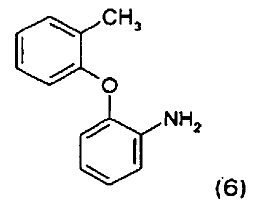 et couplage sur le composant de couplage de formule (5).

4. Utilisation d'un colorant de formule générale (1) selon la revendication 1 et/ou 2 pour teindre ou imprimer un matériau contenant des groupes carboxamide.

5. Procédé pour teindre ou imprimer un matériau contenant des groupes carboxamide, **caractérisé en ce qu'**on applique un colorant selon la revendication 1 et/ou 2 sous forme dissoute sur le matériau à un pH de 3-7 et à des températures de 70-110°C.
